# EUROPÄISCHE PATENTSCHRIFT

(11) **EP 1 271 888 B1**
(45) Veröffentlichungstag und Bekanntmachung des Hinweises auf die Patenterteilung: **17.08.2005**
(21) Anmeldenummer: 02100686.1
(22) Anmeldetag: 11.06.2002
(51) Int. Cl.: H04L 29/06, H04L 12/56

(54) **Verfahren zur internetprotokollbasierten Übertragung von Kommunikationsdaten**
Method for transferring of Internet protocol based communication data
Procédé pour transférer des données de communication fondées sur le protocole Internet

(30) Priorität: 27.06.2001 DE 10130926
(43) Veröffentlichungstag der Anmeldung: 02.01.2003
(73) Patentinhaber: SIEMENS AKTIENGESELLSCHAFT, 80333 München (DE)
(72) Erfinder: Zwack, Eduard, 82178, Puchheim (DE)

(56) Entgegenhaltungen:
- EP-A- 1 039 686
- WO-A-01/35587
- SCHULZRINNE H ET AL: "RTP: A Transport Protocol for Real-Time Applications" IETF RFC 1889, Januar 1996 (1996-01), XP002122581
- COBB J A ET AL: "TIME-SHIFT SCHEDULING-FAIR SCHEDULING OF FLOWS IN HIGH-SPEED NETWORKS" IEEE / ACM TRANSACTIONS ON NETWORKING, IEEE INC. NEW YORK, US, Bd. 6, Nr. 3, 1. Juni 1998 (1998-06-01), Seiten 274-285, XP000755006 ISSN: 1063-6692
- SREENAN C J ET AL: "INTERNET STREAM SYNCHRONIZATION USING CONCORD" PROCEEDINGS OF THE SPIE, SPIE, BELLINGHAM, VA, US, Bd. 2667, 1996, Seiten 352-359, XP000862998

## Beschreibung

Die Erfindung betrifft ein Verfahren zur internetprotokollbasierten Übertragung, insbesondere Echtzeitübertragung von Kommunikationsdaten, wie z.B. Sprach-, Video- und/oder Multimediadaten.

In zeitgemäßen Kommunikationssystemen wird zur Datenübertragung zwischen Datenverarbeitungseinrichtungen vorwiegend das sogenannte Internetprotokoll - abgekürzt IP - eingesetzt. Beim Internetprotokoll werden zu übertragende Daten in Datenpakete eingeteilt, die jeweils mit einer ein Übertragungsziel identifizierenden Zieladresse versehen, unabhängig voneinander zum Übertragungsziel übermittelt werden. Derartige Datenpakete werden häufig auch als Internetprotokoll-Datagramme oder IP-Datagramme bezeichnet.

Aufgrund seiner weltweiten Verbreitung sowie aufgrund sehr geringer Datenübertragungskosten gewinnt das Internetprotokoll im zunehmenden Maße auch für eine Echtzeitübertragung von Kommunikationsdaten an Bedeutung. Da das Internetprotokoll jedoch nicht im Hinblick auf Echtzeitanwendungen konzipiert wurde, weist es einige für Echtzeitanwendungen nachteilige Eigenschaften auf. So können beispielsweise, da die Internetprotokoll-Datagramme unabhängig voneinander übermittelt werden, die Übertragungszeiten der Internetprotokoll-Datagramme stark schwanken. Zudem treten aufgrund der asynchronen Übertragung der Internetprotokoll-Datagramme insbesondere bei hoher Übertragungslast Paketkollisionen auf, die zur Verzögerung oder zum Verwerfen ganzer Internetprotokoll-Datagramme führen.

Das Dokument WO 01/35587 Offenbart ein Paketvermittlungsverfahren, bei dem Datenpakete zeitlich ausgerichtet werden, so dass die Switcher eines Kommunikationsnetzes die zeitlich ausgerichteten Datenpakete anhand ihrer relativen Position innerhalb einer vorgegebenen Zeitrahmenstruktur vermitteln konnen.

Zum Ausgleich von Übertragungszeitschwankungen werden bei einem Empfänger eintreffende Internetprotokoll-Datagramme üblicherweise in einem Pufferspeicher zwischengespeichert, aus dem sie in konstanten Zeitabständen ausgelesen werden. Die Pufferung der Internetprotokoll-Datagramme bedingt jedoch eine weitere Verzögerung, die bei vielen Echtzeitanwendungen nicht tolerierbar ist.

Es ist Aufgabe der vorliegenden Erfindung ein Verfahren zur internetprotokollbasierten Übertragung, insbesondere Echtzeitübertragung von Kommunikationsdaten anzugeben, mit dem Übertragungszeitschwankungen vermieden werden können.

Gelöst wird diese Aufgabe durch ein Verfahren mit den Merkmalen des Patentanspruchs 1.

Im Rahmen des erfindungsgemäßen Verfahrens wird ein Kommunikationsdatenstrom, wie z.B. ein Sprach-, Video- und/oder Multimediadatenstrom, innerhalb von Internetprotokoll-Datagrammen über ein Kommunikationsnetz übertragen. Die Übertragung orientiert sich dabei zeitlich an einer Zeitmarke, die zu einem Sender der Internetprotokoll-Datagramme übermittelt wird. Die Übermittlung der Zeitmarke, die beispielsweise als Zeitimpuls oder als Zeitinformation ausgestaltet sein kann, wird vorzugsweise in regelmäßigen Zeitabständen wiederholt. Anhand der empfangenen Zeitmarke werden durch den Sender an dieser Zeitmarke zeitlich ausgerichtete Zeitintervalle oder Gruppen von Zeitintervallen zur Übertragung der Internetprotokoll-Datagramme reserviert. Die Internetprotokoll-Datagramme werden jeweils einem der Zeitintervalle zugeordnet und innerhalb des jeweils zugeordneten Zeitintervalls durch den Sender gemäß Internetprotokoll übertragen.

Der Sender der Internetprotokoll-Datagramme kann z.B. ein IP-Telefon, IP-Videofon, ein Personalcomputer oder ein IP-Anwendungsprogramm sein.

Die einzelnen Zeitintervalle oder Gruppen von Zeitintervallen können gewissermaßen als unterschiedliche Übertragungskanäle aufgefasst werden. Durch die explizite Zuordnung von zu übertragenen Internetprotokoll-Datagrammen zu Sendezeitintervallen kann die Anzahl von Datagrammkollisionen im Kommunikationsnetz in beträchtlichem Maße reduziert werden, wodurch Übertragungszeitschwankungen der Internetprotokoll-Datagramme wesentlich verringert werden. Dies erlaubt es, kleinere Datagramm-Pufferspeicher vorzusehen oder häufig sogar ganz auf solche Pufferspeicher zu verzichten, wodurch sich wiederum die Übertragungszeit der Internetprotokoll-Datagramme wesentlich verkürzt.

Ein weiterer Vorteil der erfindungsgemäßen Verfahrens besteht darin, dass es ohne größeren Aufwand in bestehenden Internetprotokoll-Kommunikationsnetzen implementierbar ist. Zum Empfang der mittels des erfindungsgemäßen Verfahrens gesendeten Internetprotokoll-Datagramme sind keinerlei Modifikationen an einem herkömmlichen Empfänger von Internetprotokoll-Datagrammen erforderlich. Das erfindungsgemäße Verfahren ist somit rückwärtskompatibel einsetzbar.

Weiterhin ist eine Lastkontrolle des Datenverkehrs auf einfache Weise implementierbar.

Vorteilhafte Ausführungsformen und Weiterbildungen der Erfindung sind in den abhängigen Ansprüchen angegeben.

Nach einer vorteilhaften Ausführungsform der Erfindung kann die Zeitmarke durch eine zentrale Zeitmarkenquelle, wie zum Beispiel eine Routereinrichtung oder einen Server, über das Kommunikationsnetz zum Sender übermittelt werden. Die Übermittlung der Zeitmarke kann vorzugsweise auf der physikalischen Schicht (Schicht 1) des OSI-Referenzmodels erfolgen. Vorteilhafterweise kann die Zeitmarke an mehrere oder alle Sender von Internetprotokoll-Datagrammen im Kommunikationsnetz oder in einem von dessen Teilbereichen von einer zentralen Zeitmarkenquelle übermittelt werden. Die eine Zeitmarke empfangenden Sender können durch die Zeitmarke zueinander synchronisiert werden, wodurch die in den jeweiligen Sendern erfindungsgemäß zu reservierenden Zeitintervalle zeitlich genau gegeneinander ausgerichtet werden. Die Übermittlung der Zeitmarke erlaubt es, auf aufwendigere Protokolle, wie z.B. das sogenannte NTP-Protokoll (NTP: Network Time Protocol), zur Synchronisation der Sender zu verzichten.

Nach einer weiteren vorteilhaften Ausführungsform der Erfindung können die Zeitintervalle in regelmäßigen, vorzugsweise nahezu konstanten Zeitabständen reserviert werden.

Nach einer vorteilhaften Weiterbildung der Erfindung kann durch den Sender ermittelt werden, welche der Zeitintervalle nicht von weiteren Sendern im Kommunikationsnetz zur Datenübertragung genutzt werden. Die zu übertragenden Internetprotokoll-Datagramme werden dann nur diesen nicht anderweitig genutzten Zeitintervallen zugeordnet und innerhalb dieser Zeitintervalle übertragen. Auf diese Weise können Kollisionen der Internetprotokoll-Datagramme mit von weiteren Sendern zu übertragenden Internetprotokoll-Datagrammen wirksam vermieden werden. Insbesondere kann vermieden werden, dass bei weiterführenden Netzwerkeinrichtungen des Kommunikationsnetzes, wie zum Beispiel Routereinrichtungen oder sogenannten Hubs, sich zeitlich überlappende Internetprotokoll-Datagramme eintreffen, für deren Weiterleitung nur eine einzelne Leitung verfügbar ist.

Die Ermittlung derjenigen Zeitintervalle, die nicht von weiteren Sendern im Kommunikationsnetz zur Datenübertragung genutzt werden, kann beispielsweise anhand eines Empfangs einer Zuteilungsinformation erfolgen, durch die den Sendern reservierbare Zeitintervalle zugeordnet werden. Alternativ dazu kann der Sender die weiteren Sender nach nicht genutzten Zeitintervallen abfragen oder eine Aufteilung der Zeitintervalle mit den weiteren Sendern aushandeln. Nach einer weitern Variante kann der Sender auch den Datagrammverkehr im Kommunikationsnetz überwachen und auf diese Weise freie, reservierbare Zeitintervalle ermitteln.

Nach einer vorteilhaften Ausführungsform der Erfindung werden weitere Internetprotokoll-Datagramme - insbesondere zum Transport von Nichtechtzeitdaten - außerhalb der reservierten Zeitintervalle asynchron, dass heißt ohne Vorgabe eines genauen Sendezeitpunkts übertragen. Die gesamte verfügbare Datenübertragungszeit wird somit durch die Reservierung der Zeitintervalle gewissermaßen in einen reservierten, synchronen Teil zur Übertragung des Kommunikationsdatenstroms und einen asynchronen Teil außerhalb der reservierten Zeitintervalle zur Übertragung von Nichtechtzeitdaten, zum Beispiel Steuer- oder Signalisierungsdaten, aufgeteilt.

Vorzugsweise können sich reservierte und nichtreservierte Zeitintervalle in vorgegebenen Zeitabständen abwechseln.

Der Anteil der zu reservierenden Zeitintervalle an der gesamten verfügbaren Datenübertragungszeit kann bedarfsgemäß, zum Beispiel je nach dem Anteil von Echtzeitdaten am gesamten Datenübertragungsvolumen, variieret werden.

Insbesondere kann mit der Zeitmarke eine den Anteil der zu reservierenden Zeitintervalle vorgebende Zeitaufteilungsinformation zum Sender übermittelt werden.

Nach einer weiteren vorteilhaften Weiterbildung der Erfindung kann im Rahmen einer Initialisierung, z.B. des Senders, eines Empfängers und/oder einer anderen Netzwerkeinrichtung des Kommunikationsnetzes, der Anteil der zu reservierenden Zeitintervalle ausgehend von Null erhöht werden. Dies bedeutet, dass anfänglich keine Zeitintervalle reserviert werden und somit alle zu übertragenden Daten zunächst asynchron übertragen werden. In dieser Phase basiert die Datenübermittlung vollständig auf dem herkömmlichen, asynchronen Internetprotokoll. Ein erfindungsgemäßer Sender von Internetprotokoll-Datagrammen kann somit zunächst ermitteln, ob das erfindungsgemäße Verfahren im Kommunikationsnetz unterstützt wird, und falls dies zutrifft, beginnen Zeitintervalle zu reservieren. Falls der Sender dagegen keine Unterstützung erkennt, zum Beispiel weil keine Zeitmarke empfangen wird, kann der Sender auf eine Reservierung von Zeitintervallen verzichten. Damit ist ein erfindungsgemäßer Sender auch rückwärtskompatibel in herkömmliche Kommunikationsnetze integrierbar.

Gemäß einer weitern vorteilhaften Weiterbildung der Erfindung kann durch den Sender ein weiteres, an der empfangenen Zeitmarke zeitlich ausgerichtetes Zeitintervall oder eine weitere Folge von Zeitintervallen für ein weiteres Kommunikationsprotokoll reserviert werden. Als weiteres Kommunikationsprotokoll kann vorzugsweise ein einfacheres Protokoll implementiert werden, bei dem weniger Steuer- und Verwaltungsdaten mit den Nutzdaten zu übertragen sind als beim Internetprotokoll. Insbesondere kann bei dem weiteren Kommunikationsprotokoll eine Adress-, Steuer- oder Kanalinformation durch die relative Position eines Datenpakets im weiteren Zeitintervall ausgedrückt werden.

Ein Ausführungsbeispiel der Erfindung wird nachfolgend anhand der Zeichnung näher erläutert.

Dabei zeigen jeweils in schematischer Darstellung:
Fig 1 ein internetprotokollbasiertes Kommunikationsnetz zur Echtzeitübertragung von Kommunikationsdatenströmen,
Fig 2 eine Zeitrahmenstruktur für eine Übertragung von Internetprotokoll-Datagrammen und
Fig 3a, 3b und 3c jeweils die zeitliche Ausrichtung von Internetprotokoll-Datagrammen bezüglich der Zeitrahmenstruktur.

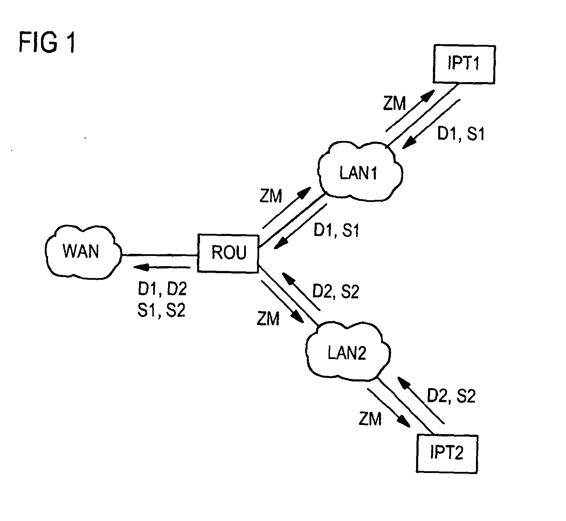

In **Fig 1** ist ein internetprotokollbasiertes Kommunikationsnetz schematisch dargestellt, das ein lokales Netz LAN1, ein lokales Netz LAN2 sowie ein Weitverkehrsnetz WAN, wie zum Beispiel das Internet, als Teilnetze umfasst. Die Teilnetze LAN1, LAN2 und WAN sind über eine Routereinrichtung ROU miteinander gekoppelt, über die Internetprotokoll-Datagramme, im Folgenden als IP-Datagramme bezeichnet, zwischen den einzelnen Teilnetzen LAN1, LAN2 und WAN vermittelt werden.

Weiterhin ist an das lokale Netz LAN1 ein internetprotokollbasiertes Kommunikationsendgerät IPT1 und an das lokale Netz LAN2 ein internetprotokollbasiertes Kommunikationsendgerät IPT2 angekoppelt. Die Kommunikationsendgeräte IPT1 und IPT2 können beispielsweise als IP-Telefone, IP-Videophone, Personalcomputer oder beliebige andere Sender von Kommunikationsdaten ausgestaltet sein.

Im Rahmen des erfindungsgemäßen Verfahrens wird von der Routereinrichtung ROU eine Zeitmarke ZM über das lokale Netz LAN1 zum Kommunikationsendgerät IPT1 und über das lokale Netz LAN2 zum Kommunikationsendgerät IPT2 übermittelt. Die Zeitmarke ZM kann beispielsweise durch einen Zeitimpuls oder eine Zeitangabe realisiert sein. Vorzugsweise wird die Zeitmarke ZM auf der physikalischen Schicht, das heißt Schicht 1 des OSI-Referenzmodells übermittelt, um eine besonders genaue Synchronisation zu gewährleisten. Anhand der Zeitmarke ZM könne die Kommunikationsendgeräte IPT1 und IPT2 zueinander synchronisiert werden, indem deren Taktgeneratoren (nicht dargestellt) oder Echtzeituhren (nicht dargestellt) zeitlich an der empfangenen Zeitmarke ZM ausgerichtet werden. Die empfangene Zeitmarke ZM kann auch zusätzlich dafür genutzt werden, die Uhrzeit auf einem Display des Kommunikationsendgeräts IPT1 oder IPT2 anzuzeigen. Eine separate Übermittlung von Zeitinformationen über ein aufwendiges Synchronisationsprotokoll, wie zum Beispiel das NTP-Protokoll (Network Time Protocol), kann somit entfallen.

Nach einer alternativen Ausgestaltung der Erfindung kann die Zeitmarke ZM statt von der Routereinrichtung ROU auch von einer anderen Netzwerkeinrichtung, wie z.B. einem sogenannten Hub, einem Server etc., zentral an die angekoppelten Kommunikationsendgeräte, hier IPT1 und IPT2, oder an beliebige weitere zu synchronisierende Netzwerkeinrichtungen übermittelt werden.

Von den Kommunikationsendgeräten IPT1 und IPT2 wird im vorliegenden Ausführungsbeispiel jeweils ein Kommunikationsdatenstrom in Echtzeit in das Weitverkehrsnetz WAN übertragen. Neben dem jeweiligen Kommunikationsdatenstrom, der zum Beispiel Sprach-, Video- und/oder Multimediadaten umfassen kann, werden von den Kommunikationsendgeräten IPT1 und IPT2 auch Nichtechtzeitdaten, wie zum Beispiel Signalisierungs-, Steuer- und/oder Dateidaten, in das Weitverkehrsnetz WAN übertragen.

Der von dem Kommunikationsendgerät IPT1 ausgehende Kommunikationsdatenstrom wird innerhalb von mit einer Zieladresse versehenen IP-Datagrammen D1 übertragen, die über das lokale Netz LAN1 und die Routereinrichtung ROU in das Weitverkehrsnetz WAN übermittelt werden. Entsprechend werden die von dem Kommunikationsendgerät IPT1 ausgehenden Nichtechtzeitdaten innerhalb von jeweils mit einer Zieladresse versehenen IP-Datagrammen S1 über das lokale Netz LAN1 und die Routereinrichtung ROU in das Weitverkehrsnetz WAN übermittelt. Analog dazu werden der vom Kommunikationsendgerät IPT2 ausgehende Kommunikationsdatenstrom innerhalb von IP-Datagrammen D2 und die von IPT2 ausgehenden Nichtechtzeitdaten innerhalb von IP-Datagrammen S2 über das lokale Netz LAN2 und die Routereinrichtung ROU in das Weitverkehrsnetz WAN übermittelt.

Die Übermittlung der Echtzeitkommunikationsdaten enthaltenden IP-Datagramme D1, D2 basiert erfindungsgemäß auf einer vorgegebenen Zeitrahmenstruktur. Aufgrund der vorgegebenen Zeitrahmenstruktur werden Echtzeitdaten enthaltende IP-Datagramme nicht mehr asynchron wie in herkömmlichen IP-basierten Kommunikationsnetzen, sondern innerhalb spezifisch dafür reservierter Zeitintervalle, dass heißt gewissermaßen synchron, übertragen.

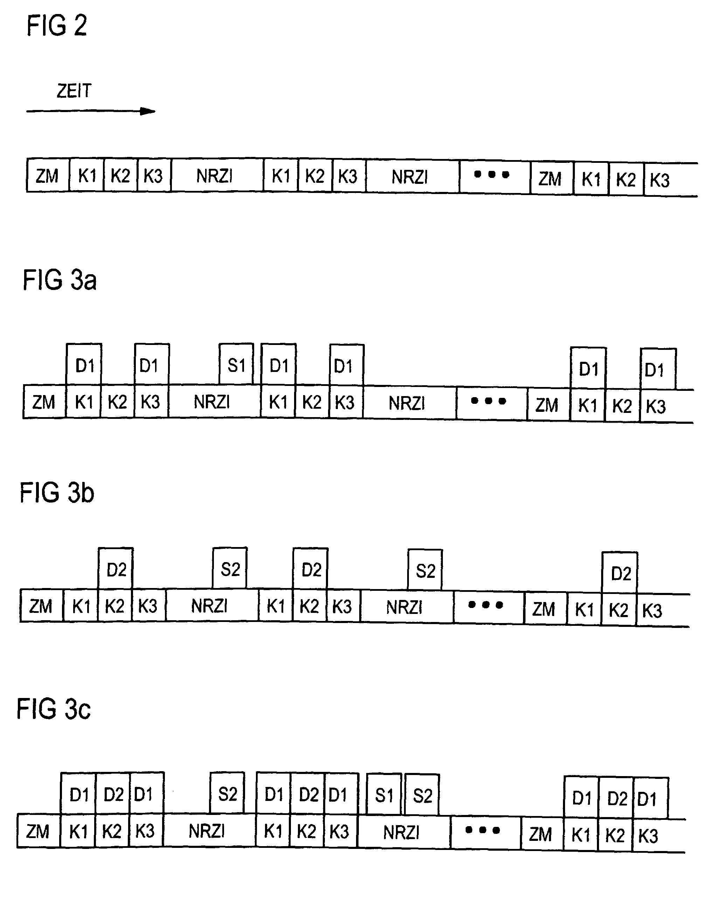

**Fig 2** zeigt ein Beispiel einer derartigen Zeitrahmenstruktur in schematischer Darstellung. Der Beginn eines jeweiligen Zeitrahmens wird durch den Empfang der Zeitmarke ZM markiert. Anschließend wechseln sich reservierte Zeitintervalle K1, K2, K3 und nicht reservierte Zeitintervalle NRZI bis zum erneuten Empfang einer Zeitmarke ZM, die den nächsten Zeitrahmen einleitet, ab. Im vorliegenden Ausführungsbeispiel schließen sich an die Zeitmarke ZM zunächst drei aneinandergrenzende Zeitintervalle K1, K2 und K3 an, die für Echtzeitdaten enthaltende IP-Datagramme reserviert sind. Unmittelbar anschließend folgt ein nicht reserviertes Zeitintervall NRZI. Die aus drei reservierten Zeitintervallen K1, K2 und K3 und einem nicht reservierten Zeitintervall NRZI bestehende Zeitintervallgruppe wiederholt sich dann in regelmäßigen Zeitabständen bis zum Empfang der nächsten Zeitmarke ZM. Ein für viele Anwendungen vorteilhafter Richtwert für die Zeitdauer einer Zeitintervallgruppe beträgt ca. 20 ms. Vorzugsweise ist die Grenze zwischen reservierten und nicht reservierten Zeitintervallen variabel. Zur kontinuierlichen Synchronisation der Zeitrahmen der Kommunikationsendgeräte IPT1 und IPT2 werden die Zeitmarken ZM in regelmäßigen, vorzugsweise nahezu konstanten Zeitabständen, von z.B. 1 s, übermittelt.

Vorzugsweise sind die reservierten Zeitintervalle K1, K2, K3 gemäß ihrer relativen Position in ihrer jeweiligen Zeitintervallgruppe unterschiedlichen Übertragungskanälen zugeordnet. So bilden die eine jeweilige Zeitintervallgruppe anführenden Zeitintervalle K1 einen ersten Übertragungskanal, die an zweiter Position befindlichen Zeitintervalle K2 einen zweiten Übertragungskanal und die an dritter Stelle befindlichen Zeitintervalle K3 einen dritten Übertragungskanal. Die einzelnen Übertragungskanäle können gewissermaßen als Zeitmultiplexkanäle aufgefasst werden, die erfindungsgemäß in das asynchrone Konzept des Internetprotokolls eingebettet sind.

Im Folgenden werden die Übertragungskanäle aus Gründen der Übersichtlichkeit jeweils mit demselben Bezugszeichen wie die jeweils zugeordneten Zeitintervalle K1, K2 bzw. K3 bezeichnet.

Zur Echtzeitübertragung eines Kommunikationsdatenstroms werden für diesen einen oder mehrere Übertragungskanäle K1, K2 bzw. K3 reserviert. Dazu wird jedem IP-Datagramm des Kommunikationsdatenstroms jeweils ein Zeitintervall des oder der reservierten Übertragungskanäle exklusiv zugeordnet, innerhalb dessen das jeweilige IP-Datagramm übertragen wird. Um ein Kommunikationsdaten enthaltendes IP-Datagramm genau innerhalb des ihm zugeordneten Zeitintervalls zu übertragen, ist dieses IP-Datagramm gegebenenfalls bis zum Beginn des zugeordneten Zeitintervalls zu verzögern. Der relative Sendezeitpunkt eines IP-Datagramms innerhalb einer Zeitintervallgruppe kann - sofern die reservierten Zeitintervalle K1, K2, K3 gleiche Länge aufweisen - durch Multiplikation der Länge eines Zeitintervalls K1, K2, K3 mit einer bei Null beginnenden Übertragungskanalnummerierung ermittelt werden.

**Fig 3a** zeigt in schematischer Darstellung die zeitliche Ausrichtung der vom Kommunikationsendgerät IPT1 ausgehenden IP-Datagramme D1 und S1 bezüglich der vorgegebenen Zeitrahmenstruktur. Für die Übertragung der die Echtzeitdaten enthaltenden IP-Datagramme D1 sind die Übertragungskanäle K1 und K3 reserviert, in denen die IP-Datagramme D1 zur Routereinrichtung ROU übertragen werden. Für das Nichtzeitdaten enthaltende IP-Datagramm S1 ist kein spezifischer Übertragungskanal reserviert, so dass das IP-Datagramm S1 innerhalb des nicht reservierten Zeitintervalls NRZI asynchron zur Routereinrichtung ROU übertragen wird.

Analog dazu ist in **Fig 3b** die zeitliche Ausrichtung der vom Kommunikationsendgerät IPT2 ausgehenden IP-Datagramme D2 und S2 bezüglich der vorgegebenen Zeitrahmenstruktur schematisch dargestellt. Für die Echtzeitdaten enthaltenden IP-Datagramme D2 ist der zweite Übertragungskanal, dass heißt die Zeitintervalle K2 zur Übertagung reserviert. Für die Nichtechtzeitdaten enthaltenden IP-Datagramme S2 wird dagegen kein spezifisches Zeitintervall reserviert, so dass die IP-Datagramme S2 innerhalb der nicht reservierten Zeitintervalle NRZI zur Routereinrichtung ROU übertragen werden. Wie in Fig 3b angedeutet ist, werden die IP-Datagramme S2 innerhalb der nicht reservierten Zeitintervalle NRZI asynchron, dass heißt ohne besondere zeitliche Ausrichtung relativ zu den Zeitintervallgrenzen übertragen.

Aufgrund der Zuordnung der IP-Datagramme D1 und D2 zu den nicht überlappenden Zeitintervallen K1, K3 und K2 wird verhindert, dass die von der Routereinrichtung ROU über die gleiche Leitung in das Weitverkehrsnetz WAN weiterzuleitenden IP-Datagramme D1 und D2 miteinander zeitlich kollidieren. Eine zeitliche Kollision von bei der Routereinrichtung ROU eintreffenden IP-Datagrammen hätte zur Folge, dass mindestens eines dieser IP-Datagramme verworfen oder zumindest bis zum Freiwerden der weiterführenden Leitung verzögert würde. Dies würde jedoch zu schwer vorhersehbaren Laufzeitschwankungen führen, die sich negativ auf das Echtzeitverhalten der Übertragung auswirken würden.

Die Zuordnung der Kommunikationsdatenströme zu den Übertragungskanälen K1, K2, K3 erfolgt dergestalt, dass immer nur eines der Kommunikationsendgeräte IPT1 und IPT2 auf einem jeweiligen Übertragungskanal K1, K2 bzw. K3 senden. Eine entsprechende temporäre Reservierung eines Übertragungskanals K1, K2, K3 für ein jeweiliges Kommunikationsendgerät, hier IPT1 oder IPT2, kann beispielsweise durch Übermitteln einer Reservierungs- oder Zuteilungsinformation zu den Kommunikationsendgeräten IPT1 und IPT2 erfolgen. Die Reservierungs- oder Zuteilungsinformation kann vorzugsweise durch eine zentrale Netzwerkeinrichtung übermittelt werden. Alternativ dazu können die Kommunikationsendgeräte IPT1 und IPT2 untereinander - durch Austausch entsprechender Meldungen - aushandeln, welche Übertragungskanäle bzw. Zeitintervalle von welchem Kommunikationsendgerät, hier IPT1 oder IPT2, reserviert werden oder reservierbar sind. Nach einer weiteren Ausführungsform des Verfahrens kann ein Kommunikationsendgerät IPT1 oder IPT2 einen freien Übertragungskanal durch Beobachtung des Netzwerkdatenverkehrs selbst ermitteln.

Aufgrund der Zuordnung der Echtzeitdaten enthaltenden IP-Datagramme D1 und D2 zu nicht überlappenden Zeitintervallen K1, K2, K3 werden IP-Datagrammkollisionen zumindest für Echtzeitdatenströme vermieden. Die in den nicht exklusiv reservierten Zeitintervallen NRZI asynchron übertragenen IP-Datagramme, hier S1 und S2, können dagegen in der Routereinrichtung ROU durchaus kollidieren.

**Fig 3c** zeigt in schematischer Darstellung die zeitliche Ausrichtung der von der Routereinrichtung ROU ins Weitverkehrsnetz WAN weitergeleiteten IP-Datagramme D1, D2, S1 und S2 bezüglich der vorgegebenen Zeitrahmenstruktur. Da die IP-Datagramme D1, D2 in reservierten, zeitlich nicht überlappenden Zeitintervallen bei der Routereinrichtung ROU eingetroffen sind, kann diese die IP-Datagramme D1 und D2 in der Reihenfolge und zeitlichen Ausrichtung ihres Eintreffens in das Weitverkehrsnetz WAN weiterleiten. Die IP-Datagramme D1 und D2 können in der Regel mit geringer, aber nahezu konstanter Verzögerung und insbesondere ohne wesentliche kollisionsbedingte Laufzeitschwankungen in aneinandergrenzenden Zeitintervallen K1, K2, K3 in das Weitverkehrsnetz WAN weitergeleitet werden.

Nach einer Verfahrensvariante kann die Routereinrichtung ROU - oder eine andere Netzwerkeinrichtung - über bestimmte Übertragungskanäle eintreffende IP-Datagramme zu deren Weiterleitung auf andere Übertragungskanäle, d.h. auf andere reservierte Zeitintervalle umsetzen. Die Umsetzung ist vorzugsweise so auszuführen, dass die dabei auftretenden Verzögerungen für jeden der umgesetzten Übertragungskanäle jeweils einen nahezu konstanten kanalspezifischen Wert haben.

Im Unterschied zu den IP-Datagrammen D1 und D2 trifft im vorliegenden Ausführungsbeispiel das asynchron übertragenen IP-Datagramm S1 nahezu gleichzeitig in einem der asynchron übertragenen IP-Datagramme S2 bei der Routereinrichtung ROU ein. Zur Weiterleitung in das Weitverkehrsnetz WAN ist daher eines dieser IP-Datagramme, hier S1, durch die Routereinrichtung ROU bis zur nächsten Sendegelegenheit zu verzögern. Im vorliegenden Ausführungsbeispiel kann das IP-Datagramm S1 erst im nicht reservierten Zeitintervall NRZI der nächsten Zeitintervallgruppe übertragen werden. Da das IP-Datagramm S1 Nichtechtzeitdaten enthält, ist die auftretende Verzögerung jedoch im Allgemeinen tolerierbar.

Die Aufteilung des Zeitrahmens in reservierte Zeitintervalle K1, K2, K3 zur synchronen Übertragung von Echtzeitdaten und nicht reservierte Zeitintervalle NRZI zur asynchronen Übertragung von Nichtechtzeitdaten kann vorteilhafterweise an das jeweils aktuelle Datenübertragungsvolumen von Echtzeit- bzw. Nichtechtzeitdaten angepasst werden. So kann beispielsweise,
falls das Übertragungsvolumen der Echtzeitdaten überwiegt, der Anteil der zu reservierenden Zeitintervalle an der gesamten verfügbaren Datenübertragungszeit entsprechend vergrößert werden. Analog dazu kann bei einem geringen Anteil zu übertragender Echtzeitdaten der Anteil der zu reservierenden Zeitintervalle entsprechend verringert werden. Zur Anpassung des Anteils der zu reservierenden Zeitintervalle kann z.B. deren Anzahl oder deren Länge variiert werden. Der Anteil der zu reservierenden Zeitintervalle kann beispielsweise anhand einer mit der Zeitmarke ZM zu übertragenden Zeitaufteilungsinformation festgelegt werden. Falls im Extremfall ausschließlich Nichtechtzeitdaten zu übertragen sind, kann die gesamte verfügbare Datenübertragungszeit für die herkömmliche, asynchrone Übertragung von IP-Datagrammen freigegeben werden.

Die Reservierung und Zuordnung bzw. Vergabe der Sendezeitintervalle für IP-Datagramme kann vorzugsweise als eine neue sog. Dienstgütefunktion (QoS-Funktion; QoS: Quality-of Service) im Kommunikationsnetz implementiert werden.

Aufgrund der Reservierung von Zeitintervallen zur Übertragung von Echtzeitdaten ist beim erfindungsgemäßen Verfahren im Unterschied zu herkömmlichen IP-basierten Übertragungsverfahren ein jeweiliger Sendezeitpunkt von IP-Datagrammen nicht mehr beliebig wählbar, sondern auf vorgegebene Zeitintervalle, hier K1, K2, K3 bzw. NRZI, beschränkt. Bei einem Empfänger von erfindungsgemäß gesendeten IP-Datagrammen sind dagegen keine Implementierungsänderungen gegenüber dem herkömmlichen Internetprotokoll erforderlich. Somit können Kommunikationseinrichtungen, hier IPT1 und IPT2, die IP-Datagramme nach dem erfindungsgemäßen Verfahren senden, auch in herkömmlichen, asynchronen IP-basierten Kommunikationsnetzen betrieben werden.

Die variable Aufteilung der gesamten verfügbaren Datenübertragungszeit in reservierte und nicht reservierte Zeitintervalle, erlaubt eine einfache, sich an unterschiedliche Netzwerkumgebungen anpassende Initialisierung des erfindungsgemäßen Verfahrens: Hierbei wird zu Beginn der Initialisierung durch die nach dem erfindungsgemäßen Verfahren arbeitenden Sender zunächst kein Zeitintervall für die Übertragung von Echtzeitdaten reserviert, so dass zunächst die gesamte Datenübertragungszeit für die herkömmliche, asynchrone Übertragung zur Verfügung steht. Währenddessen versuchen die Sender, hier IPT1 und IPT2, eine Zeitmarke ZM zu empfangen. Falls keine solche Zeitmarke empfangen wird, findet keine Reservierung von Zeitintervallen für die Übertragung von Echtzeitdaten statt. Wird dagegen eine derartige Zeitmarke ZM durch einen Sender empfangen, richtet dieser einen Zeitrahmen zeitlich an der empfangenen Zeitmarke ZM aus und reserviert vorgebbare Zeitintervalle des Zeitrahmens erfindungsgemäß für eine Übertragung von Echtzeitdaten.

## Patentansprüche

1. Verfahren zur Übertragung eines Kommunikationsdatenstroms durch Internetprotokoll-Datagramme (D1, D2) über ein Kommunikationsnetz, wobei
a) eine Zeitmarke (ZM) zu einem Sender (IPT1, IPT2) der Internetprotokoll-Datagramme (D1, D2) übermittelt wird,
b) durch den Sender (IPT1, IPT2) an der empfangenen Zeitmarke (ZM) zeitlich ausgerichtete Zeitintervalle (K1, K2, K3) zur Übertragung der den Kommunikationsdatenstrom transportierenden Internetprotokoll-Datagramme (D1, D2) reserviert werden,
c) durch den Sender (IPT1, IPT2) ermittelt wird, welche der Zeitintervalle (K1, K2, K3) nicht von einem weiteren Sender im Kommunikationsnetz zur Datenübertragung genutzt werden,
d) die Internetprotokoll-Datagramme (D1, D2) jeweils einem der nicht anderweitig genutzten Zeitintervalle (K1, K2, K3) zugeordnet werden, und
e) ein jeweiliges Internetprotokoll-Datagramm (D1, D2) innerhalb des diesem zugeordneten Zeitintervalls (K1, K2, K3) durch den Sender (IPT1, IPT2) gemäß Internetprotokoll übertragen wird.

2. Verfahren nach Anspruch 1,
**dadurch gekennzeichnet,**
**dass** die Zeitmarke (ZM) durch eine zentrale Zeitmarkenquelle (ROU) über das Kommunikationsnetz zum Sender (IPT1, IPT2) übermittelt wird.

3. Verfahren nach einem der vorhergehenden Ansprüche,
**dadurch gekennzeichnet,**
**dass** die Zeitintervalle (K1, K2, K3) von einem Taktgenerator oder einer Echtzeituhr des Senders (IPT1, IPT2) abgeleitet werden, wobei der Taktgenerator oder die Echtzeituhr mittels der empfangenen Zeitmarke (ZM) synchronisiert werden.

4. Verfahren nach einem der vorhergehenden Ansprüche,
**dadurch gekennzeichnet,**
**dass** die Zeitintervalle (K1, K2, K3) in regelmäßigen Zeitabständen reserviert werden.

5. Verfahren nach einem der vorhergehenden Ansprüche,
**dadurch gekennzeichnet,**
**dass** durch den Sender (IPT1, IPT2) ermittelt wird, welche der Zeitintervalle (K1, K2, K3) nicht von einem weiteren Sender im Kommunikationsnetz zur Datenübertragung genutzt werden, und
**dass** die Internetprotokoll-Datagramme (D1, D2) nur diesen nicht anderweitig genutzten Zeitintervallen zugeordnet und innerhalb dieser Zeitintervalle übertragen werden.

6. Verfahren nach einem der vorhergehenden Ansprüche,
**dadurch gekennzeichnet,**
**dass** weitere Internetprotokoll-Datagramme (S1, S2) außerhalb der reservierten Zeitintervalle (K1, K2, K3) asynchron übertragen werden.

7. Verfahren nach einem der vorhergehenden Ansprüche,
**dadurch gekennzeichnet,**
**dass** der Anteil der zu reservierenden Zeitintervalle (K1, K2, K3) an der gesamten verfügbaren Datenübertragungszeit bedarfsgemäß variiert wird.

8. Verfahren nach Anspruch 7,
**dadurch gekennzeichnet,**
**dass** mit der Zeitmarke (ZM) eine den Anteil der zu reservierenden Zeitintervalle (K1, K2, K3) vorgebende Zeitaufteilungsinformation zum Sender (IPT1, IPT2) übermittelt wird.

9. Verfahren nach Anspruch 7 oder 8,
**dadurch gekennzeichnet,**
**dass** im Rahmen einer Initialisierung der Anteil der zu reservierenden Zeitintervalle (K1, K2, K3) ausgehend von Null erhöht wird.

10. Verfahren nach einem der vorhergehenden Ansprüche,
**dadurch gekennzeichnet,**
**dass** durch den Sender (IPT1, IPT2) ein weiteres, an der empfangenen Zeitmarke (ZM) zeitlich ausgerichtetes Zeitintervall für ein weiteres Kommunikationsprotokoll reserviert wird.

11. Verfahren nach einem der vorhergehenden Ansprüche,
**dadurch gekennzeichnet,**
**dass** die Zeitmarke (ZM) auf der physikalischen Schicht des OSI-Referenzmodells übermittelt wird.

## Claims

1. Method for transmitting a communications data stream using Internet protocol datagrams (D1, D2) via a communications network, where
a) a timestamp (ZM) is transmitted to a transmitter (IPT1, IPT2) of the Internet protocol datagrams (D1, D2),
b) the transmitter (IPT1, IPT2) reserves time intervals (K1, K2, K3) whose timing is geared to the received timestamp (ZM) for the purpose of transmitting the Internet protocol datagrams (D1, D2) which transport the communications data stream,
c) the transmitter (IPT1, IPT2) ascertains which of the time intervals (K1, K2, K3) are not being used for data transmission by another transmitter in the communications network,
d) the Internet protocol datagrams (D1, D2) are respectively assigned to one of the time intervals (K1, K2, K3) not used elsewhere, and
e) a respective Internet protocol datagram (D1, D2) within the time interval (K1, K2, K3) associated therewith is transmitted by the transmitter (IPT1, IPT2) in line with the Internet protocol.

2. Method according to Claim 1,
**characterized**
**in that** the timestamp (ZM) is transmitted to the transmitter (IPT1, IPT2) via the communications network by a central timestamp source (ROU).

3. Method according to one of the preceding claims,
**characterized**
**in that** the time intervals (K1, K2, K3) are derived from a clock generator or a real-time clock in the transmitter (IPT1, IPT2), the clock generator or the real-time clock being synchronized by means of the received timestamp (ZM).

4. Method according to one of the preceding claims,
**characterized**
**in that** the time intervals (K1, K2, K3) are reserved at regular time periods.

5. Method according to one of the preceding claims,
**characterized**
**in that** the transmitter (IPT1, IPT2) ascertains which of the time intervals (K1, K2, K3) are not being used for data transmission by another transmitter in the communications network, and
**in that** the Internet protocol datagrams (D1, D2) are assigned only to these time intervals not used elsewhere and are transmitted within these time intervals.

6. Method according to one of the preceding claims,
**characterized**
**in that** further Internet protocol datagrams (S1, S2) outside the reserved time intervals (K1, K2, K3) are transmitted asynchronously.

7. Method according to one of the preceding claims,
**characterized**
**in that** the share of the time intervals (K1, K2, K3) to be reserved in the total available data transmission time is varied according to requirements.

8. Method according to Claim 7,
**characterized**
**in that** a time split information item prescribing the share of the time intervals (K1, K2, K3) to be reserved is transmitted to the transmitter (IPT1, IPT2) with the timestamp (ZM).

9. Method according to Claim 7 or 8,
**characterized**
**in that** initialization involves increasing the share of the time intervals (K1, K2, K3) to be reserved starting from zero.

10. Method according to one of the preceding claims,
**characterized**
**in that** the transmitter (IPT1, IPT2) reserves a further time interval whose timing is geared to the received timestamp (ZM) for a further communications protocol.

11. Method according to one of the preceding claims,
**characterized**
**in that** the timestamp (ZM) is transmitted on the physical layer of the OSI reference model.

## Revendications

1. Procédé pour le transfert d'un flux de données de communication grâce à des datagrammes de protocole Internet (D1, D2) par le biais d'un réseau de communication,
a) une marque temporelle (ZM) étant transmise à un émetteur (IPT1, IPT2) des datagrammes de protocole Internet (D1, D2),
b) l'émetteur (IPT1, IPT2) réservant des intervalles de temps (K1, K2, K3) alignés temporellement sur la marque temporelle (ZM) reçue pour le transfert des datagrammes de protocole Internet (D1, D2) transportant le flux de données de communication,
c) l'émetteur (IPT1, IPT2) déterminant lesquels des intervalles de temps (K1, K2, K3) ne sont pas utilisés par un autre émetteur dans le réseau de communication pour le transfert de données,
d) les datagrammes de protocole Internet (D1, D2) étant affectés respectivement à un des intervalles de temps (K1, K2, K3) qui ne sont pas utilisés autrement et
e) un datagramme de protocole Internet respectif (D1, D2) étant transféré à l'intérieur de l'intervalle de temps (K1, K2, K3) qui lui est affecté par l'émetteur (IPT1, IPT2) suivant le protocole Internet.

2. Procédé selon la revendication 1, **caractérisé en ce que** la marque temporelle (ZM) est transmise à l'émetteur (IPT1, IPT2) par une source de marques temporelles centrale (ROU) par le biais du réseau de communication.

3. Procédé selon l'une des revendications précédentes, **caractérisé en ce que** les intervalles de temps (K1, K2, K3) sont dérivés d'un générateur d'impulsions ou d'une horloge en temps réel de l'émetteur (IPT1, IPT2), le générateur d'impulsions ou l'horloge en temps réel étant synchronisé(e) au moyen de la marque temporelle (ZM) reçue.

4. Procédé selon l'une des revendications précédentes, **caractérisé en ce que** les intervalles de temps (K1, K2, K3) sont réservés à des laps de temps réguliers.

5. Procédé selon l'une des revendications précédentes, **caractérisé en ce que** l'émetteur (IPT1, IPT2) détermine lesquels des intervalles de temps (K1, K2, K3) ne sont pas utilisés par un autre émetteur dans le réseau de communication pour le transfert de données et **en ce que** les datagrammes de protocole Internet (D1, D2) sont affectés uniquement à ces intervalles de temps qui ne sont pas utilisés autrement et sont transférés à l'intérieur de ces intervalles de temps.

6. Procédé selon l'une des revendications précédentes, **caractérisé en ce que** d'autres datagrammes de protocole Internet (S1, S2) sont transférés de manière asynchrone en dehors des intervalles de temps réservés (K1, K2, K3).

7. Procédé selon l'une des revendications précédentes, **caractérisé en ce qu'**on fait varier selon les besoins la proportion des intervalles de temps à réserver (K1, K2, K3) par rapport au temps total de transfert de données disponible.

8. Procédé selon la revendication 7, **caractérisé en ce qu'**une information de répartition de temps définissant la proportion des intervalles de temps à réserver (K1, K2, K3) est transmise à l'émetteur (IPT1, IPT2) avec la marque temporelle (ZM).

9. Procédé selon la revendication 7 ou 8, **caractérisé en ce que**, dans le cadre d'une initialisation, la proportion des intervalles de temps à réserver (K1, K2, K3) est augmentée en partant de zéro.

10. Procédé selon l'une des revendications précédentes, **caractérisé en ce que** l'émetteur (IPT1, IPT2) réserve un autre intervalle de temps aligné temporellement sur la marque temporelle (ZM) reçue pour un autre protocole de communication.

11. Procédé selon l'une des revendications précédentes, **caractérisé en ce que** la marque temporelle (ZM) est transmise sur la couche physique du modèle de référence OSI.
